# EUROPÄISCHE PATENTSCHRIFT

(11) **EP 2 964 930 B1**
(45) Veröffentlichungstag und Bekanntmachung des Hinweises auf die Patenterteilung: **19.07.2017**
(21) Anmeldenummer: 14707726.7
(22) Anmeldetag: 27.02.2014
(51) Int. Cl.: F02C 7/08, F02C 9/00

(54) **VERFAHREN ZUR REDUZIERUNG DER CO-EMISSIONEN EINER GASTURBINE SOWIE GASTURBINE**
METHOD FOR REDUCING THE CO EMISSIONS OF A GAS TURBINE AND GAS TURBINE
PROCÉDÉ DE RÉDUCTION DES ÉMISSIONS DE CO D'UNE TURBINE À GAZ ET TURBINE À GAZ

(30) Priorität: 12.04.2013 EP 13163532
(43) Veröffentlichungstag der Anmeldung: 13.01.2016
(73) Patentinhaber: Siemens Aktiengesellschaft, 80333 München (DE)
(72) Erfinder: SAVILIUS, Nicolas, 45359 Essen (DE)
(86) Internationale Anmeldenummer: PCT/EP2014/053821
(87) Internationale Veröffentlichungsnummer: WO 2014/166671

(56) Entgegenhaltungen:
- EP-A1- 2 397 670
- EP-A2- 2 105 598
- EP-A2- 2 535 542
- US-A1- 2010 101 209
- US-B1- 6 513 318

## Beschreibung

Die Erfindung betrifft ein Verfahren zur Reduzierung der CO-Emissionen einer Gasturbine mit einem Verdichter, einer Turbine und einem dem Verdichter vorgeschalteten Luftvorwärmer. Sie betrifft weiter eine Gasturbine mit einem Verdichter, einer Turbine einem dem Verdichter vorgeschalteten Luftvorwärmer, einem zwischen Verdichter und Luftvorwärmer angeordneten Temperaturmesseinrichtung, die datenausgangsseitig mit einer Steuereinrichtung der Gasturbine verbunden ist, einer Leistungsmesseinrichtung, die datenausgangsseitig mit der Steuereinrichtung verbunden ist, sowie Mitteln zur Regelung der Wärmeübertragungsleistung des Luftvorwärmers, die steuerungseingangsseitig mit der Steuereinrichtung verbunden sind.

Stationäre Gasturbinen werden häufig in Kraftwerken zur Stromerzeugung eingesetzt. Gasturbinenkraftwerke sind im Verbundnetz sehr flexibel einsetzbar, da sie die Möglichkeit schneller Laständerungen bieten. Gerade in Zeiten des Ausbaus erneuerbarer Energien, die abhängig z. B. von Windstärke und Sonneneinstrahlung nur unregelmäßig Energie erzeugen, bieten Gasturbinenkraftwerke durch ihre Flexibilität die Möglichkeit, diese Leistungsschwankungen auszugleichen. Die Dokumente US6513318 B1, EP2535542 A2 und EP2397670 A1 beschreiben Gasturbinen aus dem Stand der Technik. Hierbei ist es jedoch unerwünscht, die Gasturbine bei nicht benötigter Leistung herunterzufahren und (wieder-)anzufahren, da es einerseits energetisch ungünstig ist, andererseits hohe mechanische Belastungen der Bauteile der Gasturbine durch die entstehenden Temperaturschwankungen erzeugt. Dies reduziert deren Lebensdauer. Nicht zuletzt benötigt das Anfahren eine gewisse Zeit, so dass die Reaktionsgeschwindigkeit bei Leistungsanforderungen aus dem Stromnetz herabgesetzt ist. Es ist daher erwünscht, die Gasturbine bei nicht benötigter Leistung bei einer möglichst geringen Leistung im Teillastbetrieb weiter zu betreiben.

Die minimal mögliche Leistung wird hierbei jedoch häufig nicht durch technische Gegebenheiten bedingt, sondern vielmehr durch gesetzliche Vorschriften hinsichtlich der Grenzwerte für Kohlenmonoxid-(CO-)Emissionen im Abgas. Bei sinkender Leistung sinkt nämlich die Verbrennungstemperatur in der Brennkammer, so dass die Verbrennung nur noch unvollständig erfolgt und die Entstehung von CO begünstigt wird.

Zur Abhilfe werden häufig Luftvorwärmer eingesetzt, die am Eintritt des Verdichters angeordnet sind. Mit ihrer Hilfe wird die Verdichtereintrittstemperatur erhöht, wodurch sich letztlich die Verbrennungstemperatur erhöht und damit der CO-Gehalt im Abgas sinkt. Zur Regelung des Luftvorwärmers sind entsprechende Mittel zur Regelung der Wärmeübertragungsleistung vorgesehen, die steuerungseingangsseitig mit einer Steuereinrichtung der Gasturbine verbunden sind.

Die Regelung des Luftvorwärmers und dessen Wärmeübertragungsleistung ist üblicherweise relativ komplex, da die CO-Emissionen typischerweise eine Funktion der relativen Leistung der Gasturbine sind: An- und Abschaltpunkt des Luftvorwärmers sind somit anhand der relativen Leistung der Gasturbine definiert, d. h. im Verhältnis zu deren maximal möglicher Leistung. Die maximal mögliche Leistung hängt dabei von der aktuellen Außentemperatur ab, so dass eine Messeinrichtung für die Außentemperatur vorgesehen sein muss. Ist der Luftvorwärmer eingeschaltet, wird üblicherweise eine Temperaturerhöhung vorgegeben, die dieser leisten muss, d. h. es ist zwischen Verdichter und Luftvorwärmer eine weitere Temperaturmesseinrichtung angeordnet, die den Temperaturunterschied vor und nach Durchtritt der angesaugten Luft durch den Luftvorwärmer ermittelt. Für diesen Temperaturunterschied wird ein Sollwert vorgegeben, anhand dessen die Wärmeübertragungsleistung des Luftvorwärmers geregelt wird. Der Sollwert ist dabei typischerweise wiederum von der Außentemperatur abhängig.

Insgesamt ist die Regelung des Luftvorwärmers damit sehr aufwändig. Schon die Berechnung der aktuellen relativen Leistung zur Ermittlung der Ein- und Ausschaltpunkte erfordert einen gewissen Kalkulationsaufwand, ebenso die Ermittlung des aktuell zu erzielenden Temperaturunterschieds über den Luftvorwärmer.

Es ist daher Aufgabe der Erfindung, ein Verfahren zur Reduzierung der CO-Emissionen einer Gasturbine sowie eine Gasturbine anzugeben, die eine technische einfachere Regelung ohne Einbußen hinsichtlich der Qualität der Reduzierung der CO-Emissionen erlauben.

Diese Aufgabe wird bezüglich des Verfahrens erfindungsgemäß gelöst, indem die Wärmeübertragungsleistung des Luftvorwärmers anhand eines Mindestwerts für die Eintrittstemperatur des Verdichters geregelt wird, und wobei der Mindestwert als Funktion der absoluten Leistung der Gasturbine vorgegeben wird.

Die Erfindung geht dabei von der Überlegung aus, dass eine technische Regelung insbesondere dadurch vereinfacht werden könnte, dass die Abhängigkeit von der aktuellen Außentemperatur entfernt wird. Hierzu sollte zunächst ein fester Mindestwert für die Verdichtereintrittstemperatur vorgegeben werden, der nicht von der Außentemperatur abhängig ist. Weiterhin sollten auch die bisherigen von der relativen Leistung abhängigen Ein- und Ausschaltpunkte entfallen. Dazu muss generell die Abhängigkeit der Regelung von der relativen Leistung der Gasturbine entfallen, da die Maximalleistung, anhand derer die relative Leistung prozentual berechnet wird, ebenfalls von der Außentemperatur abhängt. Der Mindestwert für die Verdichtereintrittstemperatur sollte daher lediglich in Abhängigkeit von der absoluten Leistung der Gasturbine vorgegeben werden. Hierbei hat sich überraschend herausgestellt, dass eine derart geregelte Luftvorwärmung, die technisch wesentlich einfacher zu realisieren ist, der bisherigen komplexen Regelung zumindest ebenbürtig ist, sowohl hinsichtlich des Wirkungsgrads der Gasturbine als auch hinsichtlich der Effizienz der CO-Reduzierung.

In vorteilhafter Ausgestaltung des Verfahrens wird die Funktion anhand einer Modellrechnung für die Gasturbine ermittelt. Die Abhängigkeit des Mindestwerts für die Verdichtereintrittstemperatur von der absoluten Leistung der Gasturbine wird somit auf theoretischer Basis spezifisch für eine bestimmte Gasturbine bestimmt. Dies kann mit entsprechenden Thermodynamik-Datenverarbeitungsprogrammen erfolgen. Die Funktion wird dabei sowohl auf die technischen Gegebenheiten der jeweiligen Gasturbinenanlage als auch auf die gesetzlichen CO-Emissionsvorschriften an deren Standort abgestimmt. Hierbei werden vorteilhafterweise auch entsprechende Sicherheiten eingearbeitet, um den CO-konformen Betrieb jederzeit sicherzustellen.

Vorteilhafterweise ist die Funktion dabei monoton fallend, d. h. für höhere absolute Leistungswerte der Gasturbine werden auch niedrigere Mindestwerte für die Verdichtereintrittstemperatur vorgegeben. Dadurch wird sichergestellt, dass im Teillastbetrieb, d. h. bei niedrigerer absoluter Leistung eine Vorwärmung der in den Verdichter eintretenden Luft erfolgt. Gerade bei geringer Leistung steigen die CO-Emissionen nämlich aufgrund der sinkenden Verbrennungstemperatur in der Brennkammer der Gasturbine an.

In weiterer vorteilhafter Ausgestaltung ist die Funktion unterhalb eines unteren Grenzwerts und/oder oberhalb eines oberen Grenzwerts für die Leistung der Gasturbine konstant. Da die Luftvorwärmung nämlich wiederum die Leistung der Gasturbine beeinflusst, werden so Rückkopplungen in diesen Bereichen vermieden. Die Regelung wird dadurch stabilisiert.

Auch verläuft die Funktion zwischen den Grenzwerten vorteilhafterweise linear. Auch dies erhöht die Stabilität der Regelung im Betrieb der Gasturbine.

Vorteilhafterweise hat die Funktion unterhalb des unteren Grenzwerts einen Wert von ca. 20°C bis 50°C und/oder oberhalb des oberen Grenzwerts einen Wert von ca. -20°C. Hierdurch wird bei einer Leistung der Gasturbine oberhalb des oberen Grenzwerts bei ausreichender Außentemperatur eine Abschaltung des Systems veranlasst. Bei niedriger Leistung ist ein Mindestwert von 20°C bis 50°C ausreichend, um die erwünschte Reduktion der CO-Emissionen zu erreichen.

In einer Gasturbine werden die CO-Emissionen vorteilhafterweise mit dem beschriebenen Verfahren reduziert.

Bezüglich der Gasturbine wird die Aufgabe gelöst, indem in der Steuereinrichtung eine Funktion hinterlegt ist, die einen Mindestwert für die Eintrittstemperatur des Verdichters in Abhängigkeit von der absoluten Leistung der Gasturbine vorgibt.

In vorteilhafter Ausgestaltung umfasst der Luftvorwärmer einen Wärmetauscher. Dieser ermöglicht eine besonders effektive und gut steuerbare Wärmeübertragung in die in den Verdichter eintretende Luft, die zudem ohne Stoffübertragung auskommt. Dadurch ist der Wärmetauscher gegenüber dem Luftstrom abgeschlossen, so dass ein optimiertes Wärmeleitungsmittel innerhalb des Kreislaufes des Wärmetauschers verwendet werden kann, beispielsweise eine Wasser-Glykol-Mischung. Der Wärmetauscher kann hierbei als Rohrgitter vor dem Eintritt des Verdichters ausgebildet sein.

Eine Kraftwerksanlage umfasst vorteilhafterweise eine beschriebene Gasturbine.

Vorteilhafterweise ist die Kraftwerksanlage dabei als Gas- und Dampfturbinenanlage ausgebildet, umfasst also eine Dampfturbine. Das Abgas der Gasturbine wird dabei durch einen Dampferzeuger geleitet, dessen erzeugter Dampf zum Antrieb der Dampfturbine genutzt wird. Die thermische Energie des Abgases wird damit genutzt, was den Wirkungsgrad der Gesamtanlage erheblich erhöht.

In vorteilhafter Ausgestaltung ist der Wärmetauscher dabei Teil eines Wärmekreislaufs mit einem Wärmetauscher im der Dampfturbine zugeordneten Teil der Kraftwerksanlage. Mit anderen Worten: Die Wärmeenergie zur Vorwärmung der in den Verdichter strömenden Luft wird in der Dampfturbine entnommen, beispielsweise im Niederdruckbereich. Dadurch wird der Wirkungsgrad der Gesamtanlage bei eingeschalteter Luftvorwärmung optimiert.

Die mit der Erfindung erzielten Vorteile bestehen insbesondere darin, dass durch die Vorgabe eines Eintrittstemperatur-Mindestwerts, der nur von der absoluten Leistung der Gasturbine abhängig ist, eine technisch wesentlich einfacher zu realisierende Regelung des Luftvorwärmers ermöglicht wird. Eine separate Ein- und Ausschaltgrenze der Regelung ist nicht mehr erforderlich. Ebenso wird die Außentemperatur zur Regelung nicht mehr benötigt, wodurch der Aufwand an benötigter Messtechnik sinkt. Die Leittechnik der Gasturbine kann ebenfalls vereinfacht werden, da nur noch die absolute Gasturbinenleistung als Eingangswert benötigt wird, die typischerweise als Messwert ohnehin vorliegt. Die Erstellung der benötigten Funktion kann spezifisch für die jeweilige Gasturbine schnell erfolgen und ermöglicht auch eine genauere Fahrweise als bisherige Verfahren.

Die Erfindung wird anhand eines in einer Zeichnung dargestellten Ausführungsbeispiels näher erläutert. Darin zeigen:
- FIG 1: schematisch eine Gasturbine in einem GuD-Kraftwerk,
- FIG 2: eine Funktionskurve der CO-Emissionen in Abhängigkeit von der relativen Gasturbinenleistung, und
- FIG 3: eine Funktionskurve eines Mindestwerts für die Verdichtereintrittstemperatur in Abhängigkeit von der absoluten Gasturbinenleistung.

Gleiche Teile sind in allen Figuren mit denselben Bezugszeichen versehen.

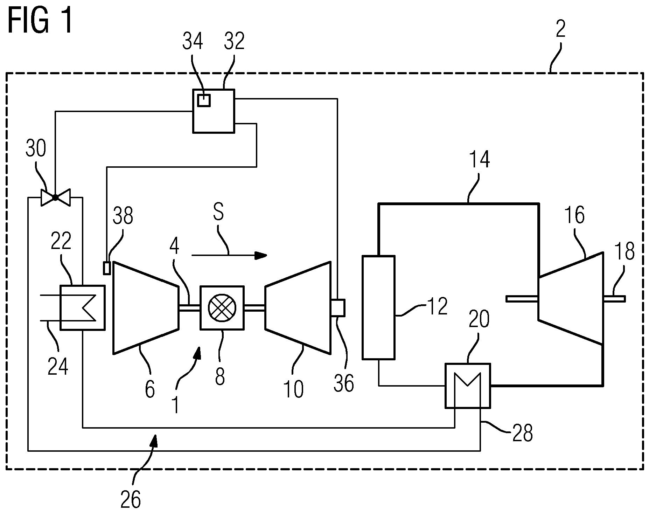

In FIG 1 ist schematisch eine Gasturbine 1 in einem Gas- und Dampfturbinen-(GuD-)Kraftwerk 2 dargestellt. Eine Gasturbine 1 ist eine Strömungsmaschine, in der ein unter Druck stehendes Gas expandiert. Sie umfasst auf einer eine Achse bildenden Welle 4 in Strömungsrichtung S des Gases einen Verdichter 6, eine Brennkammer 8 und eine Turbine 10.

Das Wirkungsprinzip beruht auf dem Kreisprozess (Joule-Prozess): Luft wird am Eintritt des Verdichters 6 angesaugt, verdichtet und in der Brennkammer 8 mit einem Brennstoff gemischt und gezündet. Anschließend wird das Heißgasgemisch in der Turbine 10 entspannt und tritt als Abgas am Austritt der Turbine 10 aus. In der Turbine wandelt sich thermische in mechanische Energie um und treibt zunächst den Verdichter 6 an. Der verbleibende Anteil wird zum Antrieb eines nicht näher gezeigten Generators verwendet.

Bei dem in der FIG 1 gezeigten GuD-Kraftwerk 2 wird das Abgas der Gasturbine 1 in einen Dampferzeuger 12 geleitet und der dort erzeugte Dampf über eine Dampfleitung 14 zum Antrieb einer Dampfturbine 16 genutzt. Die Dampfturbine 16 ist in der FIG 1 auf einer separaten Welle 18 angeordnet, kann auch auf derselben Welle 4 wie die Gasturbine 1 angeordnet sein. Der entspannte Dampf der Dampfturbine 16 wird in einen Kondensator 20 geleitet und von dort wieder dem Dampferzeuger 12 zugeführt.

Sowohl Verdichter 6 und Turbine 10 der Gasturbine 1 als auch Dampfturbine 16 weisen in einem Gehäuse in axialer Richtung abwechselnd nicht näher gezeigte Leitschaufeln und Laufschaufeln auf. Die Leitschaufeln sind entlang des Umfanges jeweiligen Welle 4, 18 einen Kreis bildend angeordnet. Ein derartiger Kreis aus Leitschaufeln wird auch als Leitschaufelrad bezeichnet. Die Laufschaufeln sind ebenfalls kranzförmig als Laufschaufelrad an der jeweiligen Welle 4, 18 drehend angeordnet. Ein Leitschaufelrad wird zusammen mit dem strömungsseitig vorangehenden bzw. nachfolgenden Laufschaufelrad als Verdichter- bzw. Turbinenstufe bezeichnet.

Vor dem Eintritt des Verdichters 6 ist ein Luftvorwärmer 22 angeordnet. Dieser umfasst einen Wärmetauscher 24, der aus gitterartig angeordneten Rohrleitungen gebildet ist. Diese sind für einen optimalen Wärmeeintrag in den Eintrittsmassenstrom von Luft in den Verdichter 6 ausgelegt. Der Wärmetauscher 24 ist dabei Teil eines Wärmekreislaufs 26 mit einem weiteren Wärmetauscher 28 im Kondensator 20 und einem Durchflussregelventil 30, mit dem die Zirkulation eines Wasser-Glykol-Gemisches im Wärmekreislauf 26 reguliert werden kann.

Das Durchflussregelventil 30 ist steuerungseingangsseitig mit einer Steuereinrichtung 32 verbunden, die den Durchfluss im Wärmekreislauf 26 und damit die Wärmeabgabe an die Luft vor dem Verdichter 6 regeln kann. Die Steuereinrichtung 32 weist einen Speicher 34 auf.

Der Luftvorwärmer 22 wird zur Erwärmung der vom Verdichter 6 ansaugbaren Luft genutzt, um somit im Teillastbetrieb den CO-Gehalt im Abgas der Gasturbine 1 unterhalb der gesetzlich vorgegebenen Grenzen zu halten. Die Steuereinrichtung 32 ist dazu dateneingangsseitig mit einer Leistungsmesseinrichtung 36 für die Leistung der Gasturbine sowie mit einer Temperaturmesseinrichtung 38 zwischen Luftvorwärmer 22 und Verdichter 6 verbunden.

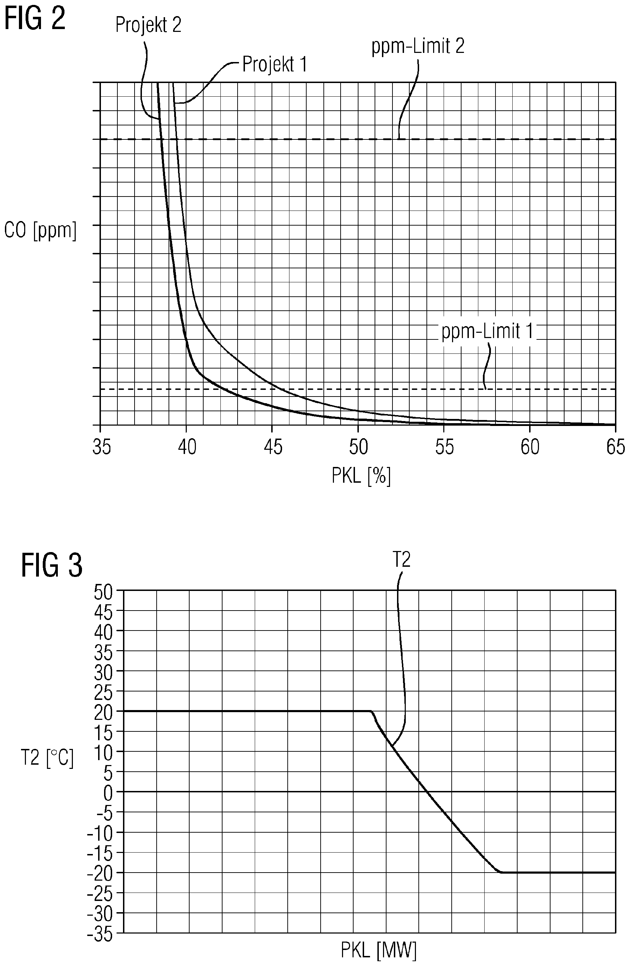

FIG 2 zeigt einen Graphen, der die funktionale Abhängigkeit des CO-Gehalts im Abgas der Gasturbine 1 verdeutlicht. Aufgetragen ist der CO-Gehalt in parts per million (ppm) gegen die relative Leistung der Gasturbine (PKL) in Prozent. Hierbei sind keine absoluten Werte zum CO-Gehalt angegeben, da dieser von der spezifischen jeweiligen Gasturbine 1 abhängt. 100% entsprechen hierbei der Leistung der Gasturbine 1 bei Volllast. Diese Volllastleistung ist jedoch abhängig von der Außentemperatur.

FIG 2 zeigt beispielhaft zwei nicht näher definierte gesetzliche Grenzwerte (ppm-Limit 1, ppm-Limit 2), die je nach Gesetzgebung am Standort des GuD-Kraftwerks 2 bestehen können. Die Kurven zeigen wiederum beispielhaft zwei unterschiedliche Werte für den CO-Gehalt im Abgas für zwei unterschiedliche GuD-Kraftwerke (Projekt 1, Projekt 2).

Der Mindestwert wird in der Steuereinrichtung 32 anhand einer im Speicher 34 hinterlegten und in FIG 3 gezeigten Funktion allein aus der absoluten Leistung der Gasturbine 1 ermittelt. Die Funktion wurde anhand theoretischer Modellrechnungen thermodynamischer Art vorab für die Gasturbine 1 speziell ermittelt. Die aktuelle absolute Gasturbinenleistung steht der Steuereinrichtung 32 aus der Leistungsmesseinrichtung 36 zur Verfügung, so dass jederzeit ein Mindestwert für die Eintrittstemperatur am Verdichter 6 vorliegt.

FIG 3 zeigt die Funktion, nämlich den Mindestwert für die Verdichtereintrittstemperatur (T2) in Grad Celsius in Abhängigkeit von der absoluten Gasturbinenleistung im Megawatt (MW). Da die Funktion auch hier nur beispielhaft für eine bestimmte Gasturbine 1 ermittelt wird, sind für die absolute Leistung keine konkreten Werte eingetragen. In einem ersten Bereich bis zu einem ersten Grenzwert verläuft die Kurve konstant bei 20°C. Alternativ sind höhere Werte wie z. B. bis zu 50°C möglich. In einem zweiten Bereich ab einem höheren zweiten Grenzwert bis zur maximalen Leistung der Gasturbine 1 verläuft sie ebenfalls konstant bei -20°C. Zwischen den genannten Grenzwerten verläuft die Kurve im Wesentlichen linear. Die Kurve ist dabei durchgehend stetig und monoton fallend.

Sofern bei der aktuell von der Gasturbine 1 zu erbringenden Leistung die von der Temperturmesseinrichtung 38 erfasste Verdichtereintrittstemperatur T2 unterhalb des zu dieser Leistung zugehörigen Mindestwertes für die Verdichtereintrittstemperatur T2 liegt, regelt die Steuereinrichtung 32 den Luftvorwärmer 22 und somit den Wärmeeintrag in die in den Verdichter 6 einströmende Luft über das Durchflussregelventil 30. Solange die Verdichtereintrittstemperatur T2 unterhalb des Mindestwerts liegt, wird der kontinuierlich zugeführte Wärmeeintrag erhöht, indem das Durchflussregelventil 30 weiter geöffnet wird, bis die Verdichtereintrittstemperatur T2 den Mindestwert erreicht. Dies vermeidet das Entstehen von unzulässig hohen Emissionen im Abgas. Solange die Verdichtereintrittstemperatur T2 auch ohne Aktivierung der Luftvorwärmers 22 oberhalb des Mindestwerts liegt bleibt das Durchflussregelventil 30 vollständig geschlossen.

Durch die Regelung des Luftvorwärmers 22 anhand eines Mindestwerts für die Verdichtereintrittstemperatur, der nur in Abhängigkeit von der absoluten Gasturbinenleistung festgelegt ist, wird die Reduzierung des CO-Gehalts im Abgas der Gasturbine 1 regelungstechnisch besonders einfach verwirklicht.

## Patentansprüche

1. Verfahren zur Reduzierung der CO-Emissionen einer Gasturbine (1) mit einem Verdichter (6), einer Turbine (10) und einem dem Verdichter (6) vorgeschalteten Luftvorwärmer (22), wobei die Wärmeübertragungsleistung des Luftvorwärmers (22) anhand eines Mindestwerts für die Eintrittstemperatur des Verdichters (4) geregelt wird, **dadurch gekennzeichnet, dass** der Mindestwert als Funktion der absoluten Leistung der Gasturbine (1) vorgegeben wird.

2. Verfahren nach Anspruch 1,
bei dem die Funktion anhand einer Modellrechnung für die Gasturbine (1) ermittelt wird.

3. Verfahren nach einem der vorhergehenden Ansprüche,
bei dem die Funktion monoton fallend ist.

4. Verfahren nach einem der vorhergehenden Ansprüche,
bei dem die Funktion unterhalb eines unteren Grenzwerts und/oder oberhalb eines oberen Grenzwerts für die Leistung der Gasturbine (1) konstant ist.

5. Verfahren nach Anspruch 4,
bei dem die Funktion zwischen den Grenzwerten linear verläuft.

6. Verfahren nach Anspruch 4 oder 5,
bei dem die Funktion unterhalb des unteren Grenzwerts einen Wert von ca. 20°C und/oder oberhalb des oberen Grenzwerts einen Wert von ca. 20°C hat.

7. Gasturbine (1) mit einem Verdichter (6), einer Turbine (10) einem dem Verdichter (6) vorgeschalteten Luftvorwärmer (22), einem zwischen Verdichter (6) und Luftvorwärmer (22) angeordneten Temperaturmesseinrichtung (38), die datenausgangsseitig mit einer Steuereinrichtung (32) der Gasturbine (1) verbunden ist, einer Leistungsmesseinrichtung (36), die datenausgangsseitig mit der Steuereinrichtung (32) verbunden ist, sowie Mitteln (30) zur Regelung der Wärmeübertragungsleistung des Luftvorwärmers (22), die steuerungseingangsseitig mit der Steuereinrichtung (32) verbunden sind, wobei in der Steuereinrichtung (32) eine Funktion hinter-legt ist, die einen Mindestwert für die Eintrittstemperatur des Verdichters (6) in Abhängigkeit von der absoluten Leistung der Gasturbine (1) vorgibt.

8. Gasturbine (1) nach Anspruch 7,
bei der der Luftvorwärmer (32) einen Wärmetauscher (24) umfasst.

9. Kraftwerksanlage (2) mit einer Gasturbine (1) nach einem der Ansprüche 7 bis 8.

10. Kraftwerksanlage (2) nach Anspruch 9, die eine Dampfturbine (16) umfasst.

11. Kraftwerksanlage (2) nach Anspruch 8 und 10,
bei der der Wärmetauscher (24) Teil eines Wärmekreislaufs (26) mit einem Wärmetauscher (28) im der Dampfturbine (16) zugeordneten Teil der Kraftwerksanlage (2) ist.

## Claims

1. Method for reducing the CO emissions of a gas turbine (1) having a compressor (6), a turbine (10) and an air preheater (22) connected upstream from the compressor (6), wherein the heat transfer capacity of the air preheater (22) is regulated with the aid of a minimum value for the inlet temperature of the compressor (6), **characterized in that** the minimum value is predetermined as a function of the absolute capacity of the gas turbine (1).

2. Method according to Claim 1,
in which the function is determined with the aid of a model calculation for the gas turbine (1).

3. Method according to either of the preceding claims,
in which the function is monotonously decreasing.

4. Method according to one of the preceding claims,
in which the function is constant below a lower limit value and/or above an upper limit value for the capacity of the gas turbine (1).

5. Method according to Claim 4,
in which the function is linear between the limit values.

6. Method according to Claim 4 or 5,
in which the function has a value of approximately 20°C below the lower limit value and has a value of approximately 20°C above the upper limit value.

7. Gas turbine (1) having a compressor (6), a turbine (10), an air preheater (22) connected upstream from the compressor (6), a temperature measurement device (38), arranged between the compressor (6) and the air preheater (22), which is connected on the data output side to a control device (32) of the gas turbine (1), a capacity measurement device (36) which is connected on the data output side to the control device (32), and means (30) for regulating the heat transfer capacity of the air preheater (22) which are connected on the control input side to the control device (32), wherein a function is stored in the control device (32) which predetermines a minimum value for the inlet temperature of the compressor (6) depending on the absolute capacity of the gas turbine (1).

8. Gas turbine (1) according to Claim 7,
in which the air preheater (22) comprises a heat exchanger (24).

9. Power plant (2) with a gas turbine (1) according to one of Claims 7 to 8.

10. Power plant (2) according to Claim 9, which comprises a steam turbine (16).

11. Power plant (2) according to Claims 9 and 10,
in which the heat exchanger (24) is part of a heat circuit (26) with a heat exchanger (28) in that part of the power plant (2) which is associated with the steam turbine (16).

## Revendications

1. Procédé de réduction des émissions de CO d'une turbine (1) à gaz, comprenant un compresseur (6), une turbine (10) et un préchauffeur (22) d'air monté en amont du compresseur (6), dans lequel on régule la puissance de transfert de la chaleur du préchauffeur (22) d'air, à l'aide d'une valeur minimum de la température d'entrée dans le compresseur (4), **caractérisé en ce que** l'on prescrit la valeur minimum en fonction de la puissance absolue de la turbine (1) à gaz.

2. Procédé suivant la revendication 1,
dans lequel on détermine la fonction à l'aide d'un calcul modélisé de la turbine (1) à gaz.

3. Procédé suivant l'une des revendications précédentes,
dans lequel la fonction est décroissante d'une manière monotone.

4. Procédé suivant l'une des revendications précédentes,
dans lequel la fonction est constante en dessous d'une valeur limite inférieure et/ou au dessus d'une valeur limite supérieure de la puissance de la turbine (1) à gaz.

5. Procédé suivant la revendication 4,
dans lequel la fonction est linéaire entre les valeurs limites.

6. Procédé suivant la revendication 4 ou 5,
dans lequel la fonction en dessous de la valeur limite inférieure a une valeur d'environ 20°C et/ou au dessus de la valeur limite supérieure une valeur d'environ 20°C.

7. Turbine (1) à gaz, comprenant un compresseur (6), une turbine (10), un préchauffeur (22) d'air monté en amont du compresseur (6), un dispositif (38) de mesure de la température monté entre le compresseur (6) et le préchauffeur (22) d'air et relié, du côté de la sortie des données, à un dispositif (32) de commande de la turbine (1) à gaz, un dispositif (36) de mesure de la puissance relié, du côté de la sortie des données, au dispositif (32) de commande ainsi que des moyens (30) de régulation de la puissance de transfert de la chaleur du préchauffeur (22) d'air relié, du côté de l'entrée de commande, au dispositif (32) de commande,
dans laquelle il est mémorisé, dans le dispositif (32) de commande, une fonction, qui prescrit une valeur minimum de la température d'entrée du compresseur (6), en fonction de la puissance absolue de la turbine (1) à gaz.

8. Turbine (1) à gaz suivant la revendication 7,
dans laquelle le préchauffeur (32) d'air comprend un échangeur de chaleur (24).

9. Centrale (2) électrique comprenant une turbine (1) à gaz suivant l'une des revendications 7 à 8.

10. Centrale (2) électrique suivant la revendication 9, qui comprend une turbine (16) à vapeur.

11. Centrale (2) électrique suivant les revendications 8 et 10,
dans laquelle l'échangeur de chaleur (24) fait partie d'un circuit (26) de chaleur, comprenant un échangeur (28) de chaleur dans la partie de la centrale (2) électrique associée à la turbine (16) à vapeur.
